# EUROPÄISCHE PATENTANMELDUNG

(11) **EP 3 059 837 A1**
(43) Veröffentlichungstag der Anmeldung: **24.08.2016**
(21) Anmeldenummer: 15155925.9
(22) Anmeldetag: 20.02.2015
(51) Int. Cl.: H02K 9/00

(54) **Kühlung einer elektrischen Maschine mit Hilfe des Injektionsprinzips**

(71) Anmelder: Siemens Aktiengesellschaft, 80333 München (DE)
(72) Erfinder: Centner, Matthias, 10555 Berlin (DE); Festa, Marco, 14612 Falkensee (DE); Franz, Christian, 10553 Berlin (DE); Sabelfeld, Ilja, 10119 Berlin (DE)

(57) **Zusammenfassung**

Zusammenfassend betrifft die Erfindung ein Verfahren zur Oberflächenkühlung von zumindest Teilen einer elektrischen Maschine, wobei ein Kühlmittelstrom (14, 15) aus einer Hochdruckströmung (14) und einer Niederdruckströmung (15) gebildet wird. Um eine hohe Kühlintensität bei möglichst niedriger Strömungsleistung zu erreichen, wird vorgeschlagen, dass die Hochdruckströmung (14) an einer zu kühlenden Oberfläche (21) unter Nutzung des Coanda-Effekts verläuft und der Kühlmittelstrom (14, 15) derartig eingestellt wird, dass sich eine Geschwindigkeitsverteilung (19) des Kühlmittelstroms (14, 15) mit möglichst hohem Gradienten an der zu kühlenden Oberfläche (21) einstellt.

## Beschreibung

Die Erfindung betrifft ein Verfahren zur Oberflächenkühlung von zumindest Teilen einer elektrischen Maschine, wobei ein Kühlmittelstrom aus einer Hochdruckströmung und einer Niederdruckströmung zusammengesetzt ist.

Weiterhin betrifft die Erfindung eine Kühlvorrichtung zur Durchführung eines derartigen Verfahrens zur Oberflächenkühlung von zumindest Teilen einer elektrischen Maschine.

Ferner betrifft die Erfindung eine elektrische rotierende Maschine, welche mindestens eine derartige Kühlvorrichtung aufweist, welche zur Kühlung einer Erregerwicklung eines Läufers und/oder einer Ständerwicklung vorgesehen ist.

Ein derartiges Verfahren kommt insbesondere bei großen elektrischen rotierenden Maschinen, beispielsweise Motoren und Generatoren, mit einer Leistung von mehr als einem Megawatt, zum Einsatz. Die Kühlintensität von beispielsweise nicht geblechten Rotoren großer elektrischer Maschinen ist, je nach Ausführung des Kühlsystems, entweder durch geometrische Parameter, insbesondere bei einfacher Oberflächenkühlung, begrenzt oder technologisch aufwendig.

So können beispielsweise bei Massivläufer-Asynchronmaschinen die Rotor-Verlustleistung und die Luftreibungsverluste mittels einer axial gerichteten Luftspaltströmung abgeführt werden, da der Läuferkäfig nicht isoliert ist, sodass die Grenztemperaturen deutlich höher sind als bei isolierten Läuferwicklungen. Demgegenüber werden beispielsweise bei Massivläufer-Vollpol-Synchronmaschinen die Erregerwicklungen mit Kühlluft durchströmt. Die Wicklung weist im Eisenbereich Langlöcher auf, welche die hauptsächliche Kühloberfläche bilden. Die Kühlluft tritt unterhalb der Wicklung in axialer Richtung in Nutgrundkanäle ein, durchströmt dann die Langlöcher in der Wicklung und in Isolierteilen und gelangt durch Löcher in den Nutverschlusskeilen in den Luftspalt.

Eine Windung einer Erregerspule besteht beispielsweise aus vier Kupferstreifen, die mechanisch bearbeitet und anschließend miteinander verlötet werden. Windungen werden ebenfalls miteinander verlötet und gegeneinander durch Zwischenlagen isoliert. Die Herstellung der Spulen ist deshalb sehr aufwendig. Aufgrund der Langlöcher im Wicklungskupfer wird zudem der effektive Querschnitt für den elektrischen Strom reduziert, sodass der Nutraum nicht effektiv durch Leitermaterial gefüllt ist.

Für eine effektive Kühlung wird eine hohe Wärmeübergangszahl, aber auch eine möglichst niedrige Kühlmitteltemperatur benötigt. Obwohl das Wicklungskupfer direkt durchströmt wird und deshalb ein guter Wärmeübergang ermöglichst wird und somit Wärmeleitwiderstände keine bedeutende Rolle spielen, ist die Kühleffektivität durch den erreichbaren Volumenstrom begrenzt. Die Strömungswiderstände müssen so weit wie möglich reduziert werden. Beispielsweise werden die Eintrittsöffnungen der Nutgrundkanäle aufwendig mit Handschleifgeräten abgerundet.

Aus DE 10 2011 076 452 A1 ist eine Gehäuseeinheit für eine elektrische Maschine mit zumindest einem Gehäuse und mit zumindest einer Strömungsvorrichtung zum Erzeugen zumindest eines ersten Stroms eines Strömungsmediums bekannt, wobei die Strömungsvorrichtung innerhalb des zumindest einen Gehäuses angeordnet ist. Es wird vorgeschlagen, dass die zumindest eine Strömungsvorrichtung zumindest ein Gebläse aufweist, welches zumindest eine Öffnung und eine Coanda-Fläche aufweist, wobei die Coanda-Fläche im Bereich der Öffnung angeordnet ist, wodurch der erste Strom des Strömungsmediums in einer vorgegebenen Richtung aus der zumindest einen Öffnung austritt und wodurch zumindest ein im Gehäuse anordenbares Bauteil gezielt anblasbar ist.

Der Erfindung liegt die Aufgabe zugrunde, ein Verfahren zur Kühlung von zumindest Teilen einer elektrischen Maschine anzugeben, welches eine hohe Kühlintensität bei möglichst niedriger Strömungsleistung liefert.

Die Aufgabe wird erfindungsgemäß durch ein Verfahren zur Oberflächenkühlung von zumindest Teilen einer elektrischen Maschine, wobei ein Kühlmittelstrom aus einer Hochdruckströmung und einer Niederdruckströmung gebildet wird, wobei die Hochdruckströmung an einer zu kühlenden Oberfläche unter Nutzung des Coanda-Effekts verläuft und der Kühlmittelstrom derartig eingestellt wird, dass sich eine Geschwindigkeitsverteilung des Kühlmittelstroms mit möglichst hohem Gradienten an der zu kühlenden Oberfläche einstellt.

Weiterhin wird die Aufgabe durch eine Kühlvorrichtung zur Durchführung eines derartigen Verfahrens zur Oberflächenkühlung von zumindest Teilen einer elektrischen Maschine gelöst.

Ferner wird die Aufgabe durch eine elektrische rotierende Maschine, welche mindestens eine derartige Kühlvorrichtung aufweist, welche zur Kühlung einer Erregerwicklung eines Läufers und/oder eines Ständers vorgesehen ist, gelöst.

Unter dem Coanda-Effekt versteht man die Eigenschaft einer strömenden Luft oder Flüssigkeit, sich an einer konvexen Oberfläche, einer sogenannten Coanda-Oberfläche, anzulegen und daran entlang zu strömen.

Dies ist besonders vorteilhaft, da durch den hohen Geschwindigkeitsgradienten des Kühlmittelstroms an der Oberfläche eine hohe Wärmeübergangszahl erreicht wird, was zu einer hohen Kühlintensität und zu einer effektiven Kühlung beiträgt.

Bei einer bevorzugten Ausführungsform wird die Hochdruckströmung derartig eingestellt, dass die Hochdruckströmung eine Mitnahme der Niederdruckströmung bewirkt. Dies ist besonders vorteilhaft, da mit der Hochdruckströmung nur ein geringer Volumenstrom transportiert wird, was zu einer gegenüber klassischer Belüftung ähnlich großen Strömungsleistung führt und somit zu einer effizienten Kühlung beiträgt.

In besonders vorteilhafter Weise erfolgt die Mitnahme der Niederdruckströmung durch die Hochdruckströmung nach dem Injektionsprinzip. Nach dem Injektionsprinzip kann bei der Entstehung eines Unterdrucks infolge einer Geschwindigkeitssteigerung beispielsweise eines Gases ein anders Gas angesaugt werden. Dies ist besonders vorteilhaft, da die Mitnahme der Niederdruckströmung durch die Hochdruckströmung nach dem Injektionsprinzip wenig Komplexität in der Realisierung erfordert.

Bei einer weiteren vorteilhaften Ausgestaltung wird die Hochdruckströmung derartig eingestellt, dass die Hochdruckströmung eine höhere Strömungsgeschwindigkeit und einen geringeren Volumenstrom als die Niederdruckströmung aufweist. Dies ist vorteilhaft, da so eine höhere Wärmeübergangszahl bei ähnlich großer Strömungsleistung wie bei einer klassischen Belüftung erreicht wird, was zu einer hohen Kühlintensität und einer effizienten Kühlung führt.

In einer bevorzugten Ausführungsform wird die Hochdruckströmung von mindestens einer Düse erzeugt. Durch die Beschleunigung des Kühlmediums mittels eines hohen statischen Drucks durch eine Düse oder mehrere Düsen ist es möglich mit Hilfe der entstehenden Hochdruckströmung eine Niederdruckströmung, welche einen zur Kühlung notwendigen Volumenstrom liefert, nach dem Injektionsprinzip mitzuführen. Dies führt zu einem niedrigen Energieverbrauch und zu niedrigen Anschaffungskosten und Betriebskosten.

Bei einer bevorzugten Ausführungsform weist die mindestens eine Düse ein Luftleitblech und/oder einen Hochdruckraum auf. Diese Ausführungsform ist leicht zu realisieren und führt zu einer Kostenersparnis gegenüber anderen Ausführungsformen.

In besonders vorteilhafter Weise ist die mindestens eine Düse in einen Nutverschlusskeil und/oder in eine Läuferkappe integriert. Dies ist besonders vorteilhaft, da durch die Integration Bauraum und Kosten eingespart werden.

Bei einer weiteren vorteilhaften Ausgestaltung weist ein Nutverschlusskeil mindestens zwei Kurzkeile auf, wobei mindestens zwei Düsen in die mindestens zwei Kurzkeile integriert sind. Durch die Verwendung von mindestens zwei Düsen entsteht eine homogenere Hochdruckströmung an der zu kühlenden Oberfläche, was zu einer gleichmäßigeren Kühlung führt und/oder die mittlere Wärmeübergangszahl an der zu kühlenden Oberfläche steigert.

Im Folgenden wird die Erfindung anhand der in den Figuren dargestellten Ausführungsbeispiele näher beschrieben und erläutert.

Es zeigen:
- FIG 1: einen schematischen Längsschnitt eines Teils einer Massivläufer-Vollpol-Synchronmaschine, wobei eine Düse zur Erzeugung einer Hochdruckströmung an der Läuferkappe angebracht ist und die Läuferkappe am Übergang zum Läuferballen eine Coanda-Oberfläche trägt,
- FIG 2: einen schematischen Längsschnitt eines Teils einer Massivläufer-Vollpol-Synchronmaschine, wobei eine Düse durch die Läuferkappe und einen zusätzlichen umlaufenden Ring gebildet wird, wobei der Ring die Coanda-Oberfläche trägt,
- FIG 3: einen schematischen Längsschnitt eines Teils einer Massivläufer-Vollpol-Synchronmaschine, wobei eine Düse und eine Coanda-Oberfläche in den Nutverschlusskeil integriert sind und
- FIG 4: einen schematischen Längsschnitt eines Teils einer Massivläufer-Vollpol-Synchronmaschine, wobei mehrere Düsen in den Nutverschlusskeil, welcher in Form mehrerer Kurzkeile ausgeführt ist, integriert sind und jeder Kurzkeil eine Coanda-Oberfläche hat.

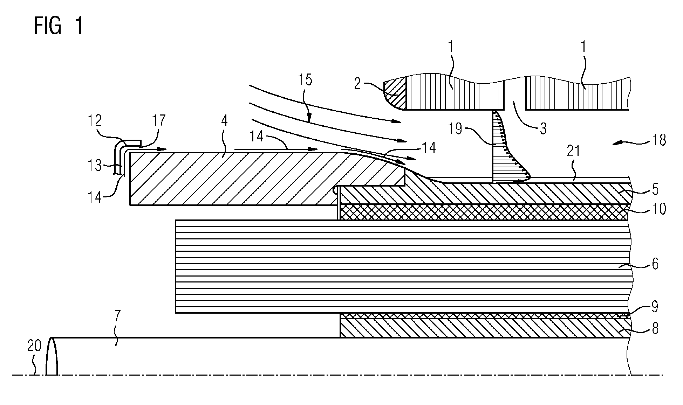

FIG 1 zeigt einen schematischen Längsschnitt eines Teils einer Massivläufer-Vollpol-Synchronmaschine, wobei eine Düse 7 zur Erzeugung einer Hochdruckströmung 14 an der Läuferkappe angebracht ist und die Läuferkappe am Übergang zum Läuferballen eine Coanda-Oberfläche trägt. Weiterhin ist, getrennt durch einen Luftspalt 18, ein Teilblechpaket 1 des Ständers dargestellt, welches eine Ständerdruckplatte 2 und exemplarisch einen Ständerkühlschlitz 3 aufweist. Der Läufer weist eine Welle 7 und ein Läufereisen 8 auf. Bei der Massivläufer-Vollpol-Synchronmaschine sind die Erregerwicklungen 6 in Nuten am Umfang des Rotors verteilt. Aufgrund der schematischen Darstellung des zweidimensionalen Schnitts ist nur eine Nut des Läufereisens 8 sichtbar, in dem sich die Erregerwicklungen 6 zusammen mit einer Nutgrundeinlage 9 und einer Nutkopfeinlage 10 befinden. Die Nut wird von einem Verschlusskeil 5 verschlossen. Am Läufereisen 8 ist eine Läuferkappe 4 montiert. Die in axialer Richtung verlaufende Symmetrieachse 20 der symmetrischen Darstellung des Ausschnitts der elektrischen rotierenden Maschine stimmt mit der Drehachse, auch Rotationsachse genannt, der elektrischen Maschine überein und teilt die Welle 7 in der Mitte.

FIG 1 zeigt eine mögliche Ausgestaltung einer Kühlvorrichtung zur Oberflächenkühlung der Erregerwicklungen 6 eines Rotors mit Hilfe des Injektionsprinzips unter Einbeziehung des Coanda-Effekts. Das Kühlmedium wird mittels hohen statischen Drucks in einem Hochdruckraum 13 durch eine Düse 17 an der Läuferkappe 4 beschleunigt. Diese Strömung wird im Folgenden Hochdruckströmung 14 genannt. Die Düse wird in FIG 1 aus der Läuferkappe 4 und einem Luftleitblech 12 gebildet. Die Hochdruckströmung 14 wird aufgrund des Coanda-Effekts nah an der konvexen Mantelfläche des Läufers, Coanda-Oberfläche 21 genannt, gehalten. Die Hochdruckströmung 14 transportiert hierbei nur einen geringen Volumenstrom und weist eine hohe Strömungsgeschwindigkeit auf, was zu einer hohen Wärmeübergangszahl führt. Die Hochdruckströmung 14 bewirkt eine Mitnahme von umgebendem Kühlmittel durch Scherwirkung und Einstellung eines Unterdrucks nach der Düse 17. Diesen Effekt nennt man Injektionsprinzip. Je größer die wirksame Scherfläche ist und je höher die Geschwindigkeit der Hochdruckströmung ist, desto größer ist auch der Niederdruck-Volumenstrom. Der tatsächlich mit der Hochdruckströmung transportierte Massenstrom spielt eine weniger bedeutende Rolle, sodass vorteilhafterweise nur ein geringer Volumenstrom durch den Hochdruckpfad geführt werden muss und die Strömungsquerschnitte klein sein können. Der Transport des komprimierten Gases erfordert zudem geringere Querschnitte innerhalb des Läufers als ein Gastransport bei atmosphärischem Druck.

Da die Hochdruckströmung 14 aufgrund des Coanda-Effekts nah an der zu kühlenden Coanda-Oberfläche 21 gehalten wird und eine Mitnahme der Niederdruckströmung 15 nach dem Injektionsprinzip bewirkt, wird ein hoher Geschwindigkeitsgradient 19 der Strömungsgeschwindigkeit an der zu kühlenden Coanda-Oberfläche 21 des Rotors erreicht, während die Strömungsgeschwindigkeit in der Nähe der Ständerkühlschlitze 3 zugunsten einer geringen erforderlichen hydraulischen Leistung einen deutlich geringeren Geschwindigkeitsgradienten 19 aufweist. Der Volumenstrom zur Aufnahme der Verlustenergie ist durch die geometrische Gestaltung des Luftspalts 18 und dessen Einund Austrittsbereiche in gewissen Grenzen auch unabhängig vom Geschwindigkeitsgradienten 19 an der der zu kühlenden Coanda-Oberfläche 21 des Rotors beeinflussbar.

Durch den Wegfall der Langlöcher bei der vorgeschlagenen Kühlvorrichtung müssen die Leiter der Läuferwicklung nicht mehr gestanzt und verlötet werden, sondern eine komplette Spule oder sogar eine Spulengruppe kann gewickelt werden, wie das bei geblechten Vollpolmaschinen praktiziert wird. Das Teilleitermaterial wird bereits mit Isolierung geliefert. Durch diese Vereinfachungen werden Materialkosten und Fertigungskosten gespart.

Weiterhin können die Nutgrundkanäle der klassischen Ausführung von Vollpolmaschinen mit massivem Läufereisen bei Oberflächenbelüftung zumindest teilweise mit Leitermaterial gefüllt werden. Dadurch werden die Stromwärmeverluste in der Erregerwicklung gesenkt. Durch Wegfall der Nutgrundkanäle erhält der Läuferkern eine höhere Steifigkeit und zusätzlich, aufgrund geringerer Kerbwirkung, eine erhöhte Festigkeit. Die Läuferkappe 4 und die gesamte Welle 7 kann festigkeitsgerechter gestaltet werden, da der Kühlmittelstrom 14, 15 der unterhalb der Läuferkappe 4 geführt wird, geringere Querschnitte erfordert.

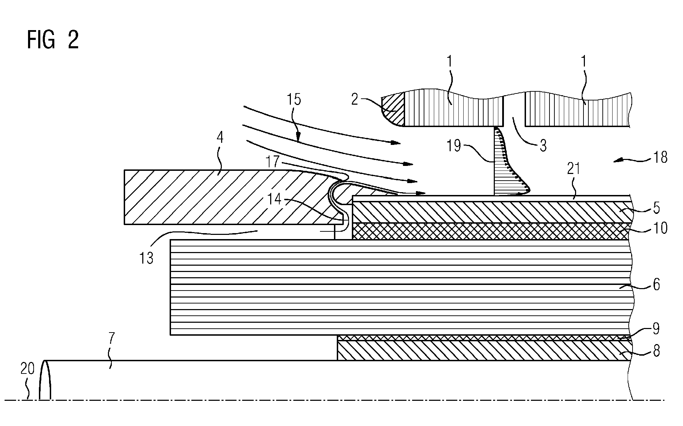

FIG 2 zeigt einen schematischen Längsschnitt eines Teils einer Massivläufer-Vollpol-Synchronmaschine, durch die Läuferkappe und einen zusätzlichen umlaufenden Ring gebildet wird, wobei der Ring die Coanda-Oberfläche trägt. Der Teil der Massivläufer-Vollpol-Synchronmaschine entspricht im Wesentlichen dem Aufbau aus FIG 1, so dass bezüglich der Bezugszeichen und der grundsätzlichen Funktion auf die Beschreibung zu FIG 1 verwiesen wird. In FIG 2 ist eine weitere mögliche Ausgestaltung einer Kühlvorrichtung zur Oberflächenkühlung der Erregerwicklungen 6 eines Rotors mit Hilfe des Injektionsprinzips unter Einbeziehung des Coanda-Effekts dargestellt. Hier wird die Düse 17 zur Erzeugung der Hochdruckströmung 14 durch die Läuferkappe und einen umlaufenden Ring gebildet. Der Weg der Hochdruckströmung 14 zu der zu kühlenden Coanda-Oberfläche 21 des Rotors ist im Vergleich zur Ausgestaltung in FIG 1 kürzer, was sich vorteilhaft auf die Strömungsgeschwindigkeit der Hochdruckströmung 14 auswirkt. Weiterhin ist die Integration der Düse 17 in die Läuferkappe 14 besonders vorteilhaft, da sowohl Bauraum als auch Kosten gegenüber der Ausgestaltung 1 oder einer Variante mit separater Düse eingespart werden können.

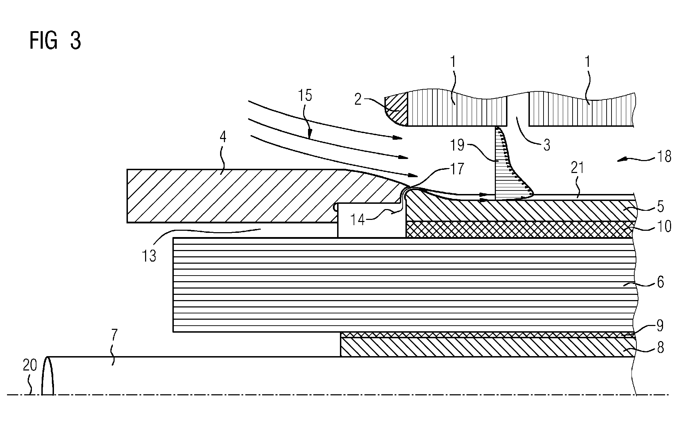

FIG 3 zeigt einen schematischen Längsschnitt eines Teils einer Massivläufer-Vollpol-Synchronmaschine, wobei eine Düse 17 in den Nutverschlusskeil 5 integriert ist. Auch hier entspricht der Teil der Massivläufer-Vollpol-Synchronmaschine im Wesentlichen dem Aufbau aus FIG 1, so dass bezüglich der Bezugszeichen und der grundsätzlichen Funktion auf die Beschreibung zu FIG 1 verwiesen wird. In FIG 3 ist eine weitere mögliche Ausgestaltung einer Kühlvorrichtung zur Oberflächenkühlung der Erregerwicklungen 6 eines Rotors mit Hilfe des Injektionsprinzips unter Einbeziehung des Coanda-Effekts gezeigt. Hier ist die Düse 17 zur Erzeugung der Hochdruckströmung 14 in den Nutverschlusskeil 5 integriert. Die Integration der Düse 17 in den Nutverschlusskeil 5 ist besonders vorteilhaft, da sowohl Bauraum als auch Kosten eingespart werden gegenüber einer Variante mit einer Düse, die ein separates Bauteil wäre.

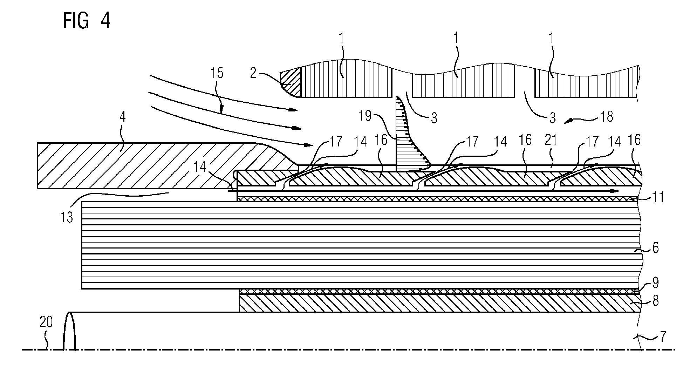

FIG 4 zeigt einen schematischen Längsschnitt eines Teils einer Massivläufer-Vollpol-Synchronmaschine, wobei mehrere Düsen 17 in den Nutverschlusskeil 5, welcher in Form mehrerer Kurzkeile 16 ausgeführt ist, integriert sind und jeder Kurzkeil 16 eine Coanda-Oberfläche hat. Auch hier entspricht der Teil der Massivläufer-Vollpol-Synchronmaschine im Wesentlichen dem Aufbau aus FIG 1, so dass bezüglich der Bezugszeichen und der grundsätzlichen Funktion auf die Beschreibung zu FIG 1 verwiesen wird. In FIG 4 ist eine weitere mögliche Ausgestaltung einer Kühlvorrichtung zur Oberflächenkühlung der Erregerwicklungen 6 eines Rotors mit Hilfe des Injektionsprinzips unter Einbeziehung des Coanda-Effekts dargestellt. Die Düsen 17 sind bevorzugt gleichmäßig in axialer Richtung angeordnet und trennen die bevorzugt gleichartig ausgeführten Kurzkeile 16, welche zum Verschluss der Läufernut vorgesehen sind, in axialer Richtung voneinander. Ein U-Profil 11 als Luftverteilerkanal ersetzt bei dieser Ausgestaltung die Nutkopfeinlage 10, sodass sämtliche Düsen 17 gleichmäßig mit der Hochdruckströmung 14 versorgt werden. Durch die Verwendung von mehreren bevorzugt gleichmäßig über den Erregerwicklungen 6 verteilten Düsen 17 entsteht eine homogene Hochdruckströmung 14 an der zu kühlenden Coanda-Oberfläche 21, was zu einer gleichmäßigen Kühlung und/oder zu einer insgesamt höheren mittleren Wärmeübergangszahl an der zu kühlenden Oberfläche führt.

Zusammenfassend betrifft die Erfindung ein Verfahren zur Oberflächenkühlung von zumindest Teilen einer elektrischen Maschine, wobei ein Kühlmittelstrom 14, 15 aus einer Hochdruckströmung 14 und einer Niederdruckströmung 15 gebildet wird. Um eine hohe Kühlintensität bei möglichst niedriger Strömungsleistung zu erreichen, wird vorgeschlagen, dass die Hochdruckströmung 14 an einer zu kühlenden Oberfläche 21 unter Nutzung des Coanda-Effekts verläuft und der Kühlmittelstrom 14, 15 derartig eingestellt wird, dass sich eine Geschwindigkeitsverteilung 19 des Kühlmittelstroms 14, 15 mit möglichst hohem Gradienten an der zu kühlenden Oberfläche 21 einstellt.

## Patentansprüche

1. Verfahren zur Oberflächenkühlung von zumindest Teilen einer elektrischen Maschine, wobei ein Kühlmittelstrom (14, 15) aus einer Hochdruckströmung (14) und einer Niederdruckströmung (15) gebildet wird, **dadurch gekennzeichnet, dass** die Hochdruckströmung (14) an einer zu kühlenden Oberfläche (21) unter Nutzung des Coanda-Effekts verläuft und der Kühlmittelstrom (14, 15) derartig eingestellt wird, dass sich eine Geschwindigkeitsverteilung (19) des Kühlmittelstroms (14, 15) mit möglichst hohem Gradienten an der zu kühlenden Oberfläche (21) einstellt.

2. Verfahren nach Anspruch 1,
**dadurch gekennzeichnet, dass** die Hochdruckströmung (14) derartig eingestellt wird, dass die Hochdruckströmung (14) eine Mitnahme der Niederdruckströmung (15) bewirkt.

3. Verfahren nach Anspruch 2,
**dadurch gekennzeichnet, dass** die Mitnahme der Niederdruckströmung (15) durch die Hochdruckströmung (14) nach dem Injektionsprinzip erfolgt.

4. Verfahren nach einem der Ansprüche 2 oder 3,
**dadurch gekennzeichnet, dass** die Hochdruckströmung (14) derartig eingestellt wird, dass die Hochdruckströmung (14) eine höhere Strömungsgeschwindigkeit und einen geringeren Volumenstrom als die Niederdruckströmung (15) aufweist.

5. Verfahren nach einem der vorherigen Ansprüche,
**dadurch gekennzeichnet, dass** die Hochdruckströmung von mindestens einer Düse (17) erzeugt wird.

6. Kühlvorrichtung zur Durchführung eines Verfahrens zur Oberflächenkühlung von zumindest Teilen einer elektrischen Maschine nach einem der Ansprüche 1 bis 5,
wobei die Kühlvorrichtung zur Erzeugung eines Kühlmittelstroms (14, 15), welcher eine Hochdruckströmung (14) und eine Niederdruckströmung (15) aufweist, vorgesehen ist.

7. Kühlvorrichtung nach Anspruch 6,
aufweisend mindestens eine Düse (17) und eine zu kühlende Oberfläche (21), **dadurch gekennzeichnet, dass** die mindestens eine Düse (17) dafür vorgesehen ist, eine Hochdruckströmung (14) zu erzeugen und dass die Hochdruckströmung (14) dafür vorgesehen ist, an einer zu kühlenden Oberfläche (21) unter Nutzung des Coanda-Effekts zu verlaufen und eine Niederdruckströmung (15) nach dem Injektionsprinzip mitzuführen.

8. Kühlvorrichtung nach Anspruch 7,
**dadurch gekennzeichnet, dass** die mindestens eine Düse (17), ein Luftleitblech (12) und/oder einen Hochdruckraum (13) aufweist.

9. Elektrische rotierende Maschine, welche mindestens eine Kühlvorrichtung nach einem der Ansprüche 6 bis 8 aufweist, wobei die Kühlvorrichtung zur Kühlung einer Erregerwicklung (6) eines Läufers und/oder eines Ständers vorgesehen ist.

10. Elektrische rotierende Maschine nach Anspruch 9,
**dadurch gekennzeichnet, dass** die mindestens eine Düse (17) in einen Nutverschlusskeil (5) und/oder in eine Läuferkappe (4) integriert ist.

11. Elektrische rotierende Maschine nach Anspruch 10,
**dadurch gekennzeichnet, dass** ein Nutverschlusskeil (5) mindestens zwei Kurzkeile (16) aufweist, wobei mindestens zwei Düsen (17) in die mindestens zwei Kurzkeile (16) integriert sind.
